# EUROPEAN PATENT APPLICATION

(11) **EP 3 557 046 A1**
(43) Date of publication of application: **23.10.2019**
(21) Application number: 18168475.4
(22) Date of filing: 20.04.2018
(51) Int. Cl.: F03D 1/06

(54) **BLADE SEGMENT FOR A WIND TURBINE INSTALLATION, A WINGLET CONNECTOR AND METHODS TO MANUFACTURE**

(71) Applicant: youWINenergy GmbH, 27568 Bremerhaven (DE)
(72) Inventor: Rohden, Rolf, 26607 Aurich (DE)
(74) Representative: Bird & Bird LLP

(57) **Abstract**

The Blade segment comprises a segment body extending along a longitudinal axis A and the segment body has a cavity accessible through a first axial end of the segment body. The segment body has a segment wall section extending from the first axial end along axis A and limiting the cavity. Axis A can be arranged in parallel with the leading and/or trailing edge of the blade segment. Further, the blade segment has a winglet connector arranged for being mechanically connected with a winglet, the winglet connector having a first panel and a second panel, which are spaced apart along axis A and are mechanically connected by one or more struts of the winglet connector, wherein the first and second panel are mechanically and/or materially connected with the segment wall section inside the cavity.

## Description

The present invention relates to a blade segment for a wind turbine installation and to a winglet connector. The blade segment and the winglet connector may advantageously be used for new wind turbine installations as well as for refurbishing existing wind turbine installations.

Winglets as part of a rotor blade may increase the output of a wind turbine installation. EP 3017189 A1 explains to connect a winglet to an essentially T-shaped mechanical connector element and to insert the connector element through an opening at the blade tip.

### Problem and Solution

Rotor blades experience time varying mechanical stresses while the wind turbine installation is operated. It is an object of the present invention to provide an improved blade segment and rotor blade comprising this blade segment.

The above object is solved by the blade segment according to claim 1 (first aspect), by a winglet according to claim 8 (second aspect), by a rotor blade according to claim 11 (third aspect) and by methods to manufacture a blade segment (fourth aspect), a method to manufacture a rotor blade (fifth aspect), and a method to retrofit a rotor blade (sixth aspect). The depending claims are directed to preferred embodiments.

The blade segment according to the first aspect comprises a segment body extending along a longitudinal axis A. The segment body has a cavity accessible through a first axial end of the segment body. Further, the segment body has a segment wall section extending from the first axial end along axis A and limiting the cavity. Axis A can be arranged in parallel with the leading and/or trailing edge of the blade segment. Further, the blade segment has a winglet connector arranged for being mechanically connected with a winglet, the winglet connector having a first panel and a second panel, which are spaced apart along axis A and are mechanically connected by one or more struts of the winglet connector, wherein the first and second panel are mechanically and/or materially connected with the segment wall section inside the cavity.

The winglet connector serves to absorbing forces and torques resulting from the winglet during operation of the rotor blade or wind turbine. The winglet connector itself is held by the hollow segment body. The spacing between the two panels helps to reduce reaction forces. The blade segment may contribute to improved durability of the rotor blade. Thereby, the blade segment and the rotor blade comprising this blade segment are improved.

Within the concept of the present invention, the blade segment according to the first aspect forms a part of a rotor blade comprising two or more blade segments. Each of the blade segments can be fabricated and sent to an installation site of a wind turbine separately. Usually, the two or more blade segments are connected on the installation site to form a rotor blade. After connecting, a second blade segment extends from the first axial end of the blade segment according to the first aspect. An opposite axial end may be connected to a rotor hub. The blade segment has a segment body limiting a cavity. So, the blade segment and its segment body are hollow.

Within the concept of the present invention, a winglet connector serves to impose reaction forces on the winglet resulting from the operation of the wind turbine installation. The protrusion may extend through the recess of the first panel towards the second panel. After fabrication, the winglet connector is arranged inside the cavity of the blade segment and its segment body. The winglet connector may reduce the mechanical stress on the segment body.

### Preferred embodiments

Preferred embodiments are explained in the following. These may be combined with each other, unless stated otherwise.

Preferably, the first panel has a recess. The recess can be surrounded by a rim portion of the respective panel. The recess can extend through the first panel along axis A. The second panel can have a similar recess. This recess can reduce the weight of the winglet connector, a radial force acting on the winglet connector during operation of the wind turbine installation and/or a shear stress between the winglet connector and the segment body.

Preferably, the strut is hollow. This can reduce the weight of the winglet connector, a radial force acting on the winglet connector during operation of the wind turbine installation and/or a shear stress between the winglet connector and the segment body.

Preferably, the first surface or the first panel extends over more than 2/3 of the chord length of the blade segment. Thereby, mechanical stresses can be reduced, which are imposed on the blade segment during operation of the wind turbine installation.

Preferably, the winglet connector has several struts, which are spaced apart along a rim of the first surface. This can increase the stability and/or the durability of the winglet connector.

In another preferred embodiment, the first surface comprises several elongated fastening elements arranged for connecting the winglet with the first panel. The fastening elements can be spaced along the outer rim of the first panel, particularly to distribute and/or mechanical stresses. The fastening elements can be threaded bores or projections essentially extending along axis A.

The first panel of another preferred embodiment has a through hole extending along axis A, wherein the strut is held in the through hole. The strut can be materially connected, preferably with glue or by a weld, with an inner face of the through hole or can be screwed into the through hole. The first panel can have a through hole for each of the struts. The second panel can be designed similarly. This can increase the stability and/or the durability of the winglet connector.

According to another preferred embodiment, the segment body comprises a first shell and a second shell, wherein an edge of one of the shells is materially connected with an edge of the other shell. The shells in combination can form the segment body and limiting the segment body's cavity. One of the shells may be a suction side shell and the other can be a pressure side shell. These shells can be manufactured separately and can be joined by an adhesive. Preferably, the segment body has built in webs or stiffeners or the like (supporting structures), particularly for its reinforcement. These supporting structures the supporting structure may connect the pressure side to the suction and they can improve the strength and load caring capacity of the blade segment or rotor blade. This may help to reduce the cost of manufacturing. This may also simplify arranging the winglet connector inside the cavity and/or connecting the winglet connector with the segment body.

A preferred device to manufacture one of the blade segments as explained before (segment manufacturing device) comprises a connector fixture for aligning the winglet connector inside the segment body's cavity or adjacent to one of the shells. The segment manufacturing device can have a mould having the shape of the blade segment or of one of the shells. Preferably, the mould is arranged such that one or more layers of fabric can be positioned in it. The segment manufacturing device can have a first adhesive supply arranged for supplying resin or another adhesive to materially connect the panels with the segment wall section. Preferably, the first adhesive supply comprises a volume control function. The connector fixture can have a frame against which the segment body and the winglet connector can abut. The segment manufacturing device can have a heating device for curing the resin. This segment manufacturing device may help to increase the reliability of the manufacturing of the blade segment and/or to improve the positioning of the winglet connector.

A winglet according to a second aspect is arranged for being mechanically connected with an axial end of a blade segment, preferably with the winglet connector of a blade segment according to the first aspect. The winglet has a first winglet element and a second winglet element, at least. These are arranged for being mechanically connected with a blade segment, preferably with the winglet connector of a blade segment according to the first aspect. The winglet elements can be sections of a winglet designed as a single piece or body. Alternatively, the winglet elements can be separate bodies which in combination form the winglet. This may reduce the effort of transport to the installation site and/or permit to replace only one of the winglet elements. The winglet can be connected with a blade segment according to the first aspect or with any other blade segment, particularly for refurbishing an existing wind turbine installation. The winglet can improve the lift produced by the rotor blade. With a specific combination of winglet elements connected to the winglet connector or to an end face of the blade segment, the winglet can be made more suitable for the wind conditions at an installation site.

In a preferred embodiment of the winglet, one or more of the winglet elements extend in a plane which can be defined by two spaced apart chords of the winglet element. A normal vector N perpendicular to the plane can form an angle with axis A, preferably within a range of +/- 30°. The angle between a first normal vector N1 on the plane in which the first winglet element extends can be different from a second normal vector N2 perpendicular to the plane in which the second winglet element extends. The chord of the blade segment and the chord of the winglet can be at an angle, preferably in the range of +/- 30°. A preferred winglet has three winglet elements. The normal vectors referring to these three winglet elements are arranged in the same plane. The first normal vector N1 of the first winglet element and the third normal vector N3 of the third winglet element form an angle, preferably between 0° to 30°.

In a preferred embodiment of the winglet, the chord of the first winglet element forms an angle with plane Q, which is perpendicular to axis A, preferably in a range of of +/-30°. The chord of the second winglet element can form an angle with plane Q, preferably in a range of +/- 30°. The chord of the first winglet element can form an angle with the chord of the second winglet element, preferably within a range of 0° to 30°.

A preferred embodiment comprises two or more winglet elements. The normal vector of the first winglet element N1 and the normal vector of the second winglet element N2 form an angle in the range of 0° to 30°. This can improve the lift produced by the rotor blade.

According to a preferred embodiment, the first winglet element comprises a lateral face and a connecting element projecting from the lateral face, wherein the connecting element is arranged for being mechanically and/or materially connected with the axial end or the winglet connector of the blade segment. This may simplify assembling a rotor blade. Preferably, the connecting element is detachable from the lateral face and can be replaced by another connecting element. This may help to adapt the winglet to an existing rotor blade or blade segment.

Preferably, the connecting element has an element face for being connected with the axial end or the winglet connector of the blade segment, wherein the element face is inclined with respect to the lateral face. The angle of inclination can be in the range of 0° to 30°. This can improve the lift produced by the rotor blade.

In a preferred embodiment, the winglet and/or at least one of the winglet elements has a density less than 3 g/cm³. The material of the winglet element can be chosen from the following group comprising aluminium, a honeycomb structure with aluminium and aluminium foam. The material can be a composite with resin and with a fabric, fibres and/or rovings. The winglet or at least one of the winglet elements can be hollow or can have a cavity. This can help to reduce centrifugal forces during operation.

A rotor blade according to the third aspect is designed for a wind turbine installation. The rotor blade comprises a blade segment as explained before and a winglet, preferably a winglet as explained before. The winglet is mechanically and/or materially connected with the winglet connector of the blade segment. The winglet may by bolted, riveted or screwed to the first plate. Additionally or alternatively, the winglet may be materially connected with the first plate by a cured resin or other adhesive. The rotor blade may show improved durability and/or stability.

A preferred embodiment comprises a cable extending from the winglet to the winglet connector, to the blade segment or to the end of the rotor blade opposite of the winglet. The cable can be arranged to serve as a lightning conductor. This can help to protect the wind turbine installation. The cable can be arranged to urge the winglet towards the blade segment. One or both ends of the cable can be locked with an anchor and/or a conical split wedges arrangement. The cable may absorb a tensile force resulting from the centrifugal acceleration acting on the winglet during operation of the wind turbine installation. The cable can help to avoid the winglet to separate from the blade segment and/or from rotor blade.

According to a third aspect, a method to manufacture a blade segment according to the first aspect has the following steps:
S1 providing the segment body, preferably in the mould of the segment manufacturing device explained before,
S2 positioning the winglet connector inside the cavity of the segment body, preferably with the connector fixture of the manufacturing device, preferably through the first axial end,
S3 mechanically connecting, preferably materially, the winglet connector with the segment wall section inside the cavity, preferably with the first adhesive supply of the manufacturing device.

Step S3 can be performed with a curable resin and/or a resin suply. This method can be carried out in a work shop under favourable conditions, rather than on the installation site. So, the quality of the blade segment can be improved.

The winglet connector of the manufactured blade segment serves to absorbing forces and torques resulting from the winglet during operation of the rotor blade or wind turbine. The winglet connector itself is held by the hollow segment body. The spacing between the two panels helps to reduce reaction forces. The blade segment may contribute to improved durability of the rotor blade. Thereby, the blade segment and the rotor blade comprising this blade segment are improved.

In a preferred embodiment, step S1 includes providing a first shell, wherein step S2 includes positioning the winglet connector in contact with the inside of the first shell, wherein step S1 includes positioning a second shell in contact with the winglet connector and the first shell, such that an edge of the second shell is adjacent to an edge of the first shell. Afterwards, step S3 can be performed, preferably with a curable resin. Preferably, the shells' edges at both the leading edge of the blade segment and at its trailing edge are connected materially. This method may allow to simplify the positioning of the winglet connector inside the cavity and/or to reduce a position tolerance of the winglet connector with respect to the blade segment.

Another preferred method serves to manufacturing a blade segment according to the first aspect and comprises the following steps (please amend):
S4 positioning the winglet connector inside a mould, preferably the mould of the blade manufacturing device mentioned before,
S5 positioning a fabric layer in contact with the winglet connector,
S6 applying resin to the fabric layer, preferably with the first adhesive supply of the segment manufacturing device, and curing the resin, such that the fabric layer is materially connected with the winglet connector.
This may reduce the cost of manufacturing and/or increase the stability of the blade segment.

According to a fourth aspect, a method to manufacture a rotor blade for a wind turbine installation at site has the following steps:
S11 providing a blade segment as explained before, and
S12 mechanically and/or materially connecting the winglet to the winglet connector.
This method can be performed on the installation site. This can help to reduce the cost of transportation and/or reduce the risk of damaging the rotor blade during transport.

A method to retrofit a rotor blade of an existing wind turbine installation (fifth aspect), preferably at the installation site, has the following steps:
S21 removing a winglet from the rotor blade, the rotor blade having a segment body, the segment body extending along a longitudinal axis A, having a cavity accessible through a first axial end of the segment body, and having a segment wall section extending from the first axial end along axis A and limiting the cavity,
S22 mechanically connecting a winglet as explained before with the rotor blade, preferably with a winglet connector inside the cavity,
preferably
S23 inserting a winglet connector into the segment body, wherein the winglet connector is arranged for being mechanically connected with a winglet, the winglet connector having a first panel and a second panel, which are spaced apart along axis A and are mechanically connected by one or more struts of the winglet connector, including mechanically and/or materially connecting the first and second panel with the segment wall section inside the cavity, preferably prior to step S22.
With this method, the output of the wind turbine installation could be increased.

### Exemplary embodiments

The figures show exemplary embodiments of the blade segment according to the first aspect of the invention and other exemplary embodiments.

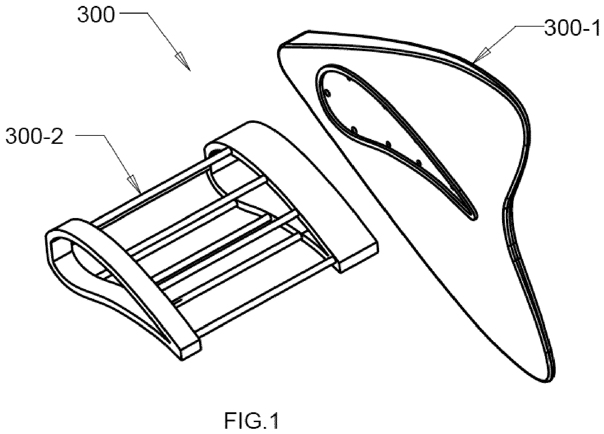

Figure 1 schematically shows an exemplary winglet connector 300-2 and a winglet 300-1. The winglet connector is arranged for being mechanically and/or materially connected in the cavity of a segment body (not shown). The winglet connector has two panels which are spaced apart and held together by several struts. Both panels have a recess, which help to limit the weight of the winglet connector. The winglet has a number of fastening elements or holes (concealed) for fasteners or bolts to be screwed into the right hand side face of the first panel.

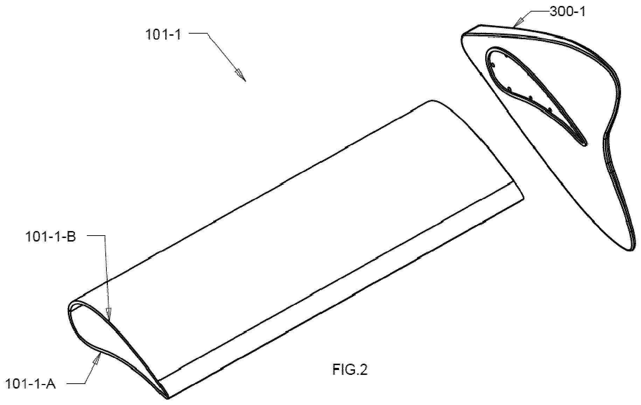

Figure 2 schematically shows an exemplary blade segment 101-1. Its segment body houses the winglet connector, which is concealed by the segment body. The segment body comprises a pressure side shell 101-1-A and suction side shell 101-1-B which are materially connected with each other by an adhesive. There are supporting structures (concealed) inside the segment body also connecting the shells and contributing to the mechanical stability and durability of the blade segment. The supporting structures also increase the load bearing capacity of the blade. The winglet 300-1 is similar to the one of figure 1.

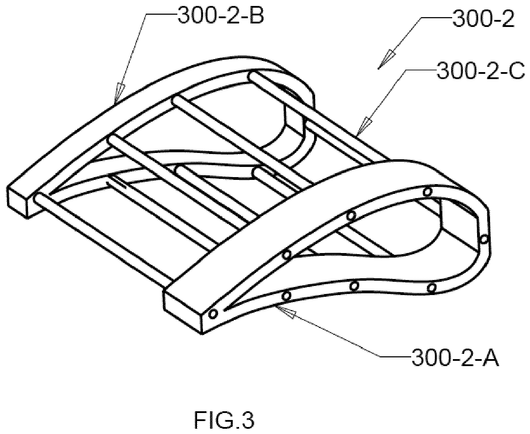

Figure 3 schematically shows the winglet connector 300-2 of figures 1 and 2. The first surface of the first panel 300-2-A adjacent to the first axial end of the blade segment is visible. Along a rim portion of the first panel, there is a number of fastening elements for mechanical fasteners such as bolts. These fastening elements are aligned with the struts 300-2-C. The struts can be welded or glued to the first panel. The struts are essentially parallel to each other. The second panel 300-2-B is also mechanically connected with the struts.

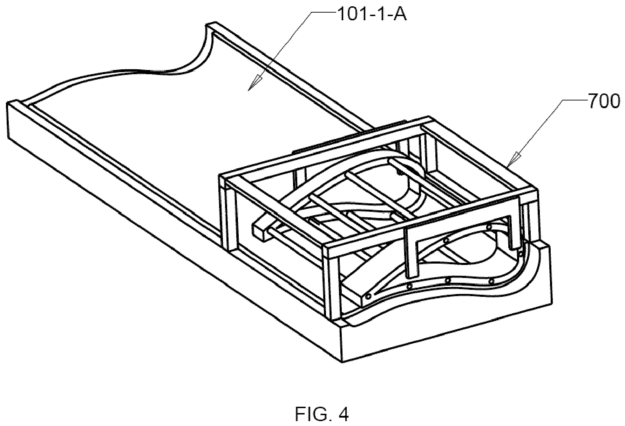

Figure 4 shows schematically a state of an exemplary method to manufacture one of the blade segments comprising two shells. A first shell 100-1-A, here the pressure side shell, is placed in a mould. The winglet connector is positioned in contact with an inner surface of the first shell. The connector fixture 700 is positioned such that the first shell and the winglet connector abut against it. Next a resin could be applied to the area where the panels of the winglet connector and the first shell are in contact. The segment manufacturing device can have a volume controlled resin supply with a resin volume control. Alternatively or additionally, the supply of resin can be checked visually, i.e. resin showing up at particular point indicates a sufficient volume of resin. The resin can be cured with a heating device. Alternatively, the resin cures by itself without the application of heat.

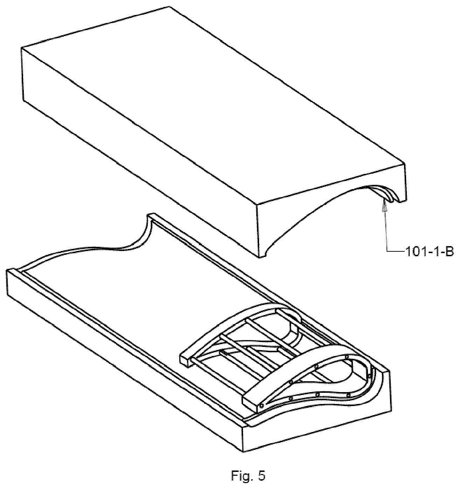

Figure 5 schematically shows another step of an exemplary method to manufacture one of the blade segments comprising two shells. The connector fixture is already removed. A second shell 100-1-B is held in a lid part of the mould. A lid part of the mould is ready for lowering the second shell onto the first shell and the winglet connector. Afterwards, resin can be supplied along longitudinal edges of the two shells and to the top surfaces of the panels of the winglet connector and can be cured, while the mould is closed. After curing, the mould is opened and the blade segment can be removed.

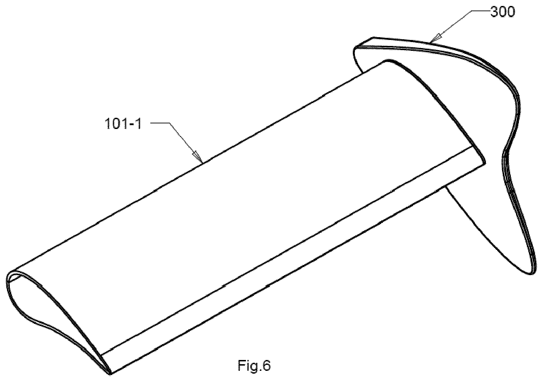

Figure 6 schematically shows a exemplary rotor blade comprising the blade segment 101-1 and winglet 300-1. The winglet is mechanically connected to the winglet connector (concealed) of the blade segment. The step of mechanically connecting the prefabricated blade segment with the winglet is advantageously performed on the installation site.

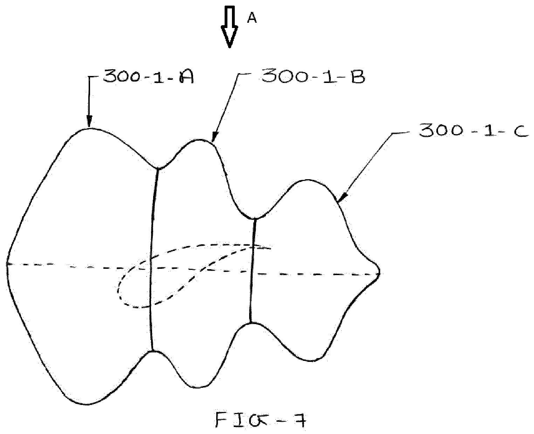

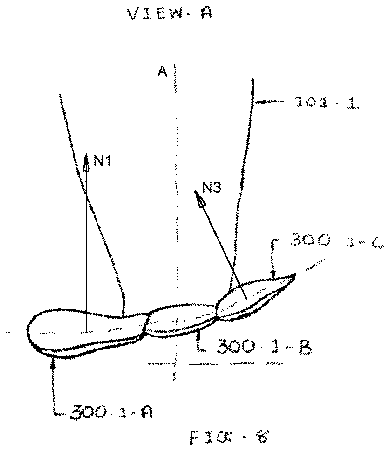

Figure 7 shows a winglet having three winglet elements 300-1-A, 300-1-B and 300-1-C. These winglet elements form a single piece winglet. The chord of the winglet, indicated by a dashed line, forms an angle with the chord of the blade segment (dashed outline) of about 30°. An arrow "A" indicates the viewing direction of figure 8.
Figure 8 shows the winglet of figure 7 as seen along arrow "A" of figure 7. The winglet is connected to the blade segment 101-1, particularly to its winglet connector (concealed) inside the blade segment. The first normal vector N1 of the first winglet element and the third normal vector N3 of the third winglet element form an angle of about 25°. Normal vectors Ni, N3 and the segment body's axis A can be in the same plane.

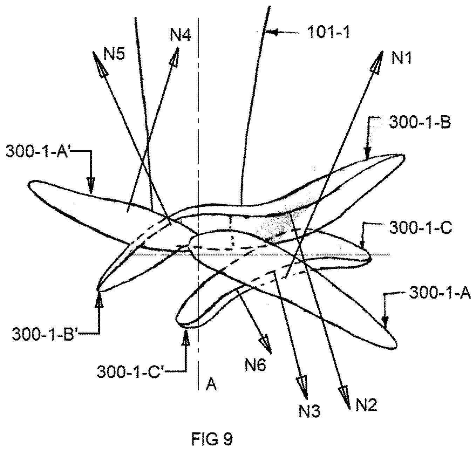

Figure 9 shows another winglet as seen along its chord. The winglet is mechanically connected to the blade segment 101-1 extending along axis A, particularly connected to its winglet connector (concealed) inside the blade segment. The angles of six winglet elements are not drawn to scale but are exaggerated for easier recognition. With axis A, the first normal vector N1 of winglet element 300-1-A forms an angle of about 15°, the second normal vector N2 of winglet element 300-1-B about -15°, the third normal vector N3 of winglet element 300-1-B about -15°, the fourth normal vector N4 of winglet element 300-1-A' about 15°, the fifth normal vector N5 of winglet element 300-1-B' about -15° and the sixth normal vector N6 of winglet element 300-1-C' about -15°.

## Claims

1. Blade segment (101-1) for a rotor blade of a wind turbine installation, the blade segment comprising:
a segment body extending along a longitudinal axis A, having a cavity accessible through a first axial end of the segment body, and having a segment wall section extending from the first axial end along axis A and limiting the cavity,
a winglet connector (300-2) arranged for being mechanically connected with a winglet, the winglet connector having a first panel (300-2-A) and a second panel (300-2-B), which are spaced apart along axis A and are mechanically connected by one or more struts (300-2-C) of the winglet connector, wherein the first and second panel are mechanically and/or materially connected with the segment wall section inside the cavity.

2. Blade segment according to claim 1, wherein the first surface comprises several elongated fastening elements arranged for connecting the winglet with the first panel.

3. Blade segment according to claim 2, wherein the fastening elements are threaded bores or projections essentially extending along axis A.

4. Blade segment according to one of the preceding claims, wherein the first panel has a through hole extending along axis A, wherein the strut is held in the through hole.

5. Blade segment according to one of the preceding claims, wherein the segment body comprises a first shell (101-1-A) and a second shell (101-1-B), wherein an edge of the first shell is materially connected with an edge of the second shell.

6. A device for manufacturing a blade segment according to one of the preceding claims, the device comprising a alignment fixture (700) arranged for aligning the winglet connector inside the segment body's cavity or adjacent to one of the shells, preferably comprising a mould to accept the segment body or one of its shells, preferably comprising a first adhesive supply arranged for providing an adhesive or resin for materially connecting the winglet connector with the segment wall section, preferably comprising a heating device for curing the resin.

7. Winglet (300-1) arranged for being mechanically connected with an axial end of a blade segment, preferably with the winglet connector (300-2) of a blade segment according to one of the preceding claims, the winglet having at least a first winglet element and a second winglet element, preferably being separate bodies.

8. Winglet according to claim 7, wherein the first winglet element comprises a lateral face and a connecting element projecting from the lateral face, wherein the connecting element is arranged for being mechanically and/or materially connected with the axial end or the winglet connector of the blade segment.

9. Winglet according to claim 8, wherein the connecting element has an element face for being connected with the axial end or the winglet connector of the blade segment, preferably wherein the element face is inclined with respect to the lateral face by +/- 30°.

10. Winglet according to one of claims 7 to 9, wherein at least one winglet element extends in a plane defined by two spaced apart chords of the winglet element, wherein a normal vector N perpendicular to the plane forms an angle with axis A, preferably within a range of +/- 30°.

11. Winglet according to one of claims 7 to 10, comprising at least two winglet elements, each extending in a plane defined by two spaced apart chords of the winglet element, wherein the normal vector of the first winglet element N1 and the normal vector of the second winglet element N2 form an angle in the range of 0° to 30°.

12. Winglet according to one of claims 7 to 11, wherein the winglet and/or at least one winglet element has a density less than 3 g/cm³., preferably

13. Rotor blade for a wind turbine installation, the rotor blade comprising a blade segment according to one of claims 1 to 5 and a winglet, preferably a winglet (300-1) according to one of claims 7 to 11, the winglet being mechanically and/or materially connected with the winglet connector.

14. Rotor blade according to claim 13, further having a cable extending from the winglet to the winglet connector, to the blade segment or to the end of the rotor blade opposite of the winglet, preferably the cable is arranged to serve as a lightning conductor and/or to urge the winglet towards the blade segment.

15. Method to manufacture a blade segment according to one of claims 1 to 5, having the following steps:
S1 providing the segment body in a mould, preferably in the mould of the manufacturing device according to claim 6,
S2 positioning the winglet connector inside the cavity of the segment body, preferably with the connector fixture of the manufacturing device according to claim 6, preferably through the first axial end,
S3 mechanically connecting, preferably materially, the winglet connector with the segment wall section inside the cavity, preferably with the first adhesive supply of the manufacturing device according to claim 6.

16. Method according to claim 15, wherein step S1 includes providing a first shell, wherein step S2 includes positioning the winglet connector in contact with the inside of the first shell, wherein step S1 includes positioning a second shell in contact with the winglet connector and the first shell, such that an edge of the second shell is adjacent to an edge of the first shell.

17. Method to manufacture a blade segment according to one of claims 1 to 5, having the following steps (please amend):
S4 positioning the winglet connector inside a mould, preferably the mould of the manufacturing device according to claim 6,
S5 positioning a fabric layer in contact with the winglet connector,
S6 applying resin to the fabric layer, preferably with the first adhesive supply of the manufacturing device according to claim 6, and curing the resin, such that the fabric layer is materially connected with the winglet connector.

18. Method to manufacture a rotor blade for a wind turbine installation at site, having the following steps:
S11 providing a blade segment according to one of claims 1 to 5 and 15 to 17, and
S12 mechanically and/or materially connecting the winglet to the winglet connector.

19. Method to retrofit a rotor blade of a wind turbine installation, comprising the following steps:
S21 removing a winglet from the rotor blade, the rotor blade having a segment body, the segment body extending along a longitudinal axis A, having a cavity accessible through a first axial end of the segment body, and having a segment wall section extending from the first axial end along axis A and limiting the cavity,
S22 mechanically connecting a winglet according to one of claims 7 to 9 with the rotor blade, preferably with a winglet connector inside the cavity,
preferably
S23 inserting a winglet connector into the segment body, wherein the winglet connector is arranged for being mechanically connected with a winglet, the winglet connector having a first panel (300-2-A) and a second panel (300-2-B), which are spaced apart along axis A and are mechanically connected by one or more struts (300-2-C) of the winglet connector, including mechanically and/or materially connecting the first and second panel with the segment wall section inside the cavity, preferably prior to step S22.
